(19) **Europäisches Patentamt**
**European Patent Office**
**Office européen des brevets**

(11) **EP 3 812 287 B1**

(12) **EUROPEAN PATENT SPECIFICATION**

(45) Date of publication and mention
of the grant of the patent:
**18.09.2024 Bulletin 2024/38**

(21) Application number: **20820314.1**

(22) Date of filing: **06.07.2020**

(51) International Patent Classification (IPC):
**B29C 65/18** (2006.01)     **B29C 65/38** (2006.01)
**B65B 51/14** (2006.01)

(52) Cooperative Patent Classification (CPC):
(C-Sets available)
**B29C 66/0044; B29C 65/18; B29C 65/305;
B29C 65/38; B29C 65/76; B29C 66/1122;
B29C 66/3474; B29C 66/43; B29C 66/8122;
B29C 66/81419; B29C 66/81427; B29C 66/81871;
B29C 66/8242; B29C 66/8322; B29C 66/849;**

(Cont.)

(86) International application number:
**PCT/JP2020/026320**

(87) International publication number:
**WO 2021/006230 (14.01.2021 Gazette 2021/02)**

(54) **HEAT SEALER PROVIDED WITH INTERFACE TEMPERATURE SENSOR**

**HEISSSIEGELGERÄT MIT TEMPERATURSENSOR AN DER ZWISCHENFLÄCHE**

**THERMOSCELLEUSE DOTÉE D'UN CAPTEUR DE TEMPÉRATURE D'INTERFACE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.07.2019 JP 2019128661**

(43) Date of publication of application:
**28.04.2021 Bulletin 2021/17**

(73) Proprietor: **Hishinuma, Kazuo
Kawasaki-shi, Kanagawa 212-0054 (JP)**

(72) Inventor: **Hishinuma, Kazuo
Kawasaki-shi, Kanagawa 212-0054 (JP)**

(74) Representative: **Strehl Schübel-Hopf & Partner
Maximilianstrasse 54
80538 München (DE)**

(56) References cited:
**EP-A1- 3 168 032       WO-A1-2018/225290
JP-A- 2003 001 708    JP-A- 2011 167 950
JP-A- 2015 120 334    JP-A- 2016 076 019
JP-U- 3 056 172         US-B1- 6 197 136**

(52) Cooperative Patent Classification (CPC): (Cont.)
**B29C 66/91212; B29C 66/91221; B29C 66/91231;**
**B29C 66/91423; B29C 66/9192; B29C 66/91951;**
**B29C 66/961;** B29C 66/71; B29C 66/723;
B29C 66/7352; B29C 66/81422; B29C 66/929;
B65B 51/14; B65B 2051/105

C-Sets
**B29C 66/8122, B29K 2879/08;**
B29C 66/71, B29K 2023/06;
B29C 66/71, B29K 2023/12;
B29C 66/71, B29K 2067/003;

B29C 66/8122, B29K 2827/18;
B29C 66/8122, B29K 2877/00

**Description**

[Technical Field]

This invention relates to a heat seal system capable of controlling heat seal temperature appropriately.

[Background Art]

For the bonding of plastic films and sheets in processing of bag-making and sealing, heat-sealing techniques are frequently used, wherein a heating body is pressed on the surface of a heat seal material (hereinafter, occasionally referred to "work"), and faces to be in contact with each other and heat-bonded utilizing heat conduction. The heat-bonding method (heat-sealing) has been commonly used (ASTM F88 established in 1968).

The heating methods are classified broadly into (1) a method of heating the material from both sides simultaneously by a pair of heating bodies utilizing heat conduction (Jaw system), (2) one side heating which utilizes heat conduction from a surface of the material and is constructed by a heating body only on one side, (3) a method of local heating near bonding faces (ultrasonic heating, magnetic induction heating, dielectric loss blowing hot air, etc.).

The heat bonding (heat-sealing) utilizes thermoplasticity phenomenon of plastics.

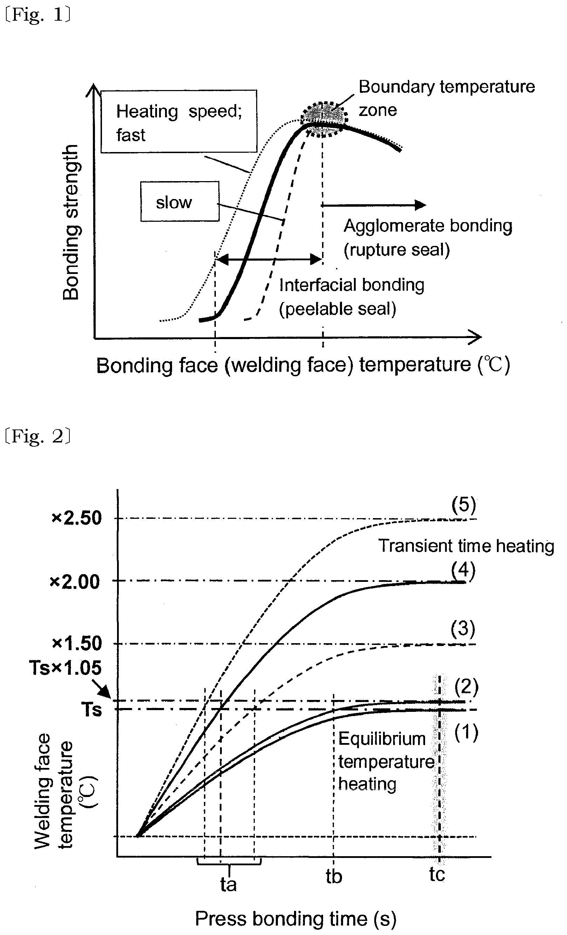

Upon appearance of heat bonding, it enters in a peelable seal zone (interfacial bonding zone) where bonding strength is raised with the elevation of heating temperature at the bonding face. When the heating temperature arrives at a prescribed value or more, the bonding faces become melted into paste state, and after cooled, they are integrated into agglomerate bonding. When the results of measuring specimens at each heating temperature by tensile test are plotted, it can be seen that the heating temperature and heating speed are parameters of heat seal strength (Hishinuma effect), as shown in Figure 1.

In general, the width of interfacial bonding temperature zone is 3 - 8 °C. When the heating of bonding faces is adjusted to the boundary temperature zone between interfacial bonding and agglomerate bonding (proper temperature zone), edge cut can be prevented by utilizing peel energy at bonding faces, and properties of each material can be utilized fully. Furthermore, insufficient heating and overheating and depressed to ensure quality of heat seal.

In order to analyze the characteristics of present heating jaw system, using surface temperature of heating body as a parameter, the method of measuring welding face temperature was applied, and temperature response of the sensor was measured at the welding face (bonding face) of a work in laboratory scale. The results are shown in Figure 2.

(1) is a response in the case that the surface temperature of the heating body was set at the controlled temperature Ts. Theoretically, the arrival time at Ts is a long time. This is referred to as (tc).

(2) indicates a response of welding face (bonding face) at the heating temperature (about 1.05 times Ts) where 95 % response becomes Ts. The arrival time is referred to as (tb).

(3) indicates a response of welding face (bonding face) in the case that the heating temperature is raised to (Ts × 1.5), in order to arrive at Ts in a time shorter than 95 %. The arrival times group at the time is referred to as (ta).

(4), (5) are the cases where heating temperature values were changes in order to arrive at Ts in a further shorter time. The characteristics are explained in the next paragraph.

From the examples shown in Figure 2, relations between the arrived temperature on both sides heating at the same temperature and the heating time are classified into three types of response pattern, i.e. converging equilibrium temperature (Tc), 95 % arrival point (Tb), high speed rising region (Ta). The characteristics of the three response pattern types are:

(1) Equilibrium temperature (Tc) heating: It utilizes a principle that the welding face temperature of work converges equilibrium to the surface temperature of heating body. Although a longer time than other methods is required until to finish heating, operation in essential temperature value is possible. For the heat seal test in laboratories, this method is exclusively selected.

(2) 95 % arrival point (Tb) heating: The heating temperature is set at (heating body surface temperature - environmental temperature) × 95 % + environmental temperature as a target temperature. Since the temperature difference from equilibrium temperature is within 5 °C, and the dispersion of temperatures enters within 2 °C against the dispersion of heating temperature control, its practicability in the time setting control system (hereinafter referred to "time limit system") is high.

(3) Utilization of high speed rising region (Ta): Because the time to reach a prescribed heating temperature is small to finish one operation in a short time, the productivity is high. Temperature gradient at 95 % arrival point is ≒ 3 °C/0.1 s, whereas that in heat rising region for 0.4-0.5 s is a high speed of ≒ 10 °C/0.1 s.

Today, an appropriate technique to control welding face (bonding face) temperature has not been established in heat bonding techniques, and the heating operation is high speed region is conducted by time control of arrival time.

In order to address peelable seal having a narrow temperature range where the properties of peelable seal appear, high accuracy temperature control and high speed press bonding operation are required, but conventional methods do not satisfy this expectation.

In the present situation, productivity is in preference, and (3) utilization of high speed rising region (Ta) is conventionally used. However, since high accuracy techniques to control press bonding [0013] time and temperature have not been established, practically, insufficient heating is feared and temperature is set raising about 10 °C. Accordingly, the bonding state tends to be agglomerate bonding which exceeds the boundary temperature region shown in Figure 1, and it makes difficult to regulate to form interfacial bonding which results in easy opening. The solution of this problem is strongly desired worldwide.

On the other hand, the inventor developed a method of setting the temperature of heating body and press bonding time while heat-sealing by mounting temperature sensors on a surface of heating body and between welding faces of test pieces (Patent Document 1), and a method of controlling heat seal temperature by mounting surface temperature sensors in the vicinity of heating source and a surface of heating body (Patent Document 2). Both methods have been patented.

[Prior Art Document]

[Patent Documents]

[Patent Document 1] JP 3465741
[Patent Document 2] JP 4623662

US 6 197 136 B1 discloses a method of heat-sealing using a heat-sealing apparatus which heat-seals a heat seal material (7) by nipping it between a pair of heating bodies (1, 1), which comprises: mounting a cover material (4) on the surface (2) of at least one of the heating bodies (1, 1) to be in contact with the heat seal material (7); attaching a minute temperature sensor (3) to the surface (2) of the at least one of the heating bodies (1, 1); and controlling temperature of welding face by the temperature detected by the minute temperature sensor (3). The document also discloses a heat-sealing apparatus which nips a heat seal material (7) between a pair of heating bodies (1, 1) to heat-seal it, comprising a cover material (4) is mounted on the surface (2) of at least one of the heating bodies (1, 1) to be in contact with the heat seal material (7); a minute temperature sensor (3) is attached to the surface (2) of the at least one of the heating bodies (1, 1); and an actuating mechanism which moves the heating bodies (1, 1) forward and backward or a controlling mechanism which controls heating mechanism of the heating bodies, based on the detected result of the minute temperature sensor (3). The document furthermore discloses a method of heat-sealing using an apparatus which nips a heat seal material (7) between a heating element (1) and an anvil (1) to heat-seal it, which comprises: mounting a cover material (4) on the surface (2) of the heating element (1) to be in contact with the heat seal material (7); attaching a minute temperature sensor (3) to the surface (2) of the heating element(1); and controlling temperature of welding face by the temperature detected by the minute temperature sensor (3). In addition, the document discloses a heat-sealing apparatus which nips a heat seal material (7) between a heating element(1) and an anvil (1) to heat seal it, wherein a cover (4) is mounted on the surface (2) of the heating element (1) to be in contact with the heat seal material (7); and a minute temperature sensor (3) is attached to the surface of the heating element (1).

WO 2018/225290 A1 discloses a heat seal device and a method for forming a composite heat seal structure in which a linear detachable seal is added to a belt-shaped detachable seal in the longitudinal direction thereof, wherein the heat seal device comprises: a crimping belt conveyance heating part including a pair of belts hung between rollers so as to travel, and heating bodies disposed apart from the belts; and a die roller crimping part including an elastic body roller and a linear roller having, on the circumferential surface thereof, linear projections arranged in the circumferential direction.

EP 3 168 032 A1 discloses a joining device (1) with a first tool half (1a) and with at least one first thin-film sensor (6a) arranged on a surface (2a) of the first tool half (1a), the at least one first thin-film sensor (6a) is set up to detect at least one process parameter value of at least one process parameter during a joining process; and it discloses a joining method in which at least one process parameter value of a process parameter on a surface (2a) of at least a first tool half (1a) is detected by means of at least one first thin-film sensor (6a).

[Summary of the Invention]

[Problems to be Solved by the Invention]

Heretofore, there is a provision against the accuracy of temperature control of heating body (heating bar) (ASTM F2029; 2000). The surface temperature of heating body relates multiply to the size and form of the heating body, the position of heating source, heating unevenness of heater, the position of detecting sensor, control speed, mounting method, heat dissipation (heat insulation), etc., and unevenness of heating temperature at heat bonding face is 10 °C or more. Therefore, in order to exhibit essential properties of works (plastic material), it is required to restrain the variation of welding face temperature within 3 °C.

Currently, there is no appropriate control system, and the time limit system is employed where pressing time of heating body is controlled. In the system, the pressing time is set relied on visual inspection of actually produced specimens and tensile test (JIS Z 0238, ASTM F88) of a site of the specimens. Necessarily, agglomerate bonding where a constant value of heat bonding (heat seal) strength is gotten is recommended (JIS Z 0238).

For the purpose of maintaining stable heat bonding quality, it is expected to develop a technique to control welding face (bonding face) temperature being an essential parameter directly.

Every temperature control methods previously developed by the inventor are to nip a temperature sensor between heat bonding faces of test pieces, and the temperature sensor is incorporated in the product after heat seal. Therefore, in the heat-sealing by a seal machine, the control of temperature is relied on time control based on the data obtained by the preliminary experiment.

While, if heat seal temperature can be traced in a seal machine, more exact temperature control can be done.

An object of the invention is to provide a means capable of controlling exact temperature by measuring the variation of temperature at a specific point in heating system on the side of apparatus relating to heat seal on a real time.

[Means for Solving Problem]

The inventor noticed that the heat flow from heat source to heat seal material relates directly to the temperature of welding face (bonding face). Then, he mounted a minute temperature sensor on the surface of the covering material provided on the surface of heating body, and detected temperature difference depending on heat flow in temperature rise region to succeed is the simulation of temperature response to welding face. The measurement of interface temperature between the covering material and the heat seal material is actually equivalent to the measurement of the surface temperature of the heat seal material.

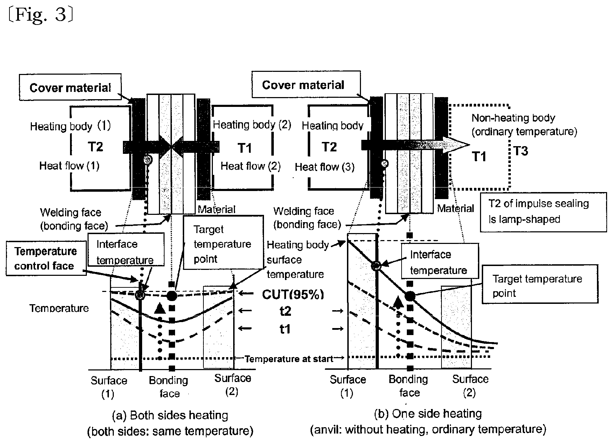

Explanation of welding face temperature response formula A schematic view of heating jaw system is illustrated in Figure 3. Figure 3 (a) indicates a variation of temperature distribution in a work, in the case that heating temperatures of a pair of heating bodies were adjusted to the same.

On the other hand, Figure 3 (b) indicates a variation of temperature distribution in the work, in the case that the temperature of only one of the heating bodies was adjusted, but the other was allowed to stand at room temperature.

When a heating body is pressed in a short time, the temperature response of welding face (bonding face) can be dealt with step response.

The definitions of T1, T2, T3 are indicated in Figure 3. Provided that a constant determined by the heat conductivity of material and heat capacity, such as thickness, is denoted k; time constant, and environmental temperature is denoted T3, the welding face temperature response including heating from both sides is expressed by the following formula, as a general formula (see Figure 3).

$$\mathrm{Tb} = [\mathrm{T2} - (\mathrm{T2} - \mathrm{T1}) \cdot \mathrm{n}] \cdot (1 - e^{-kt}) + \mathrm{T3} \qquad (1)$$

Wherein Tb is the aforementioned temperature of 95 % arrival point, and T1 and T2 are surface temperatures of each heating body. n is expressed by

$$\mathrm{n} = (\mathrm{R1} + \mathrm{R3} + \mathrm{rl}) \ / \ 2 \ (\mathrm{R1} + \mathrm{R3} + \mathrm{rl}) \qquad (2)$$

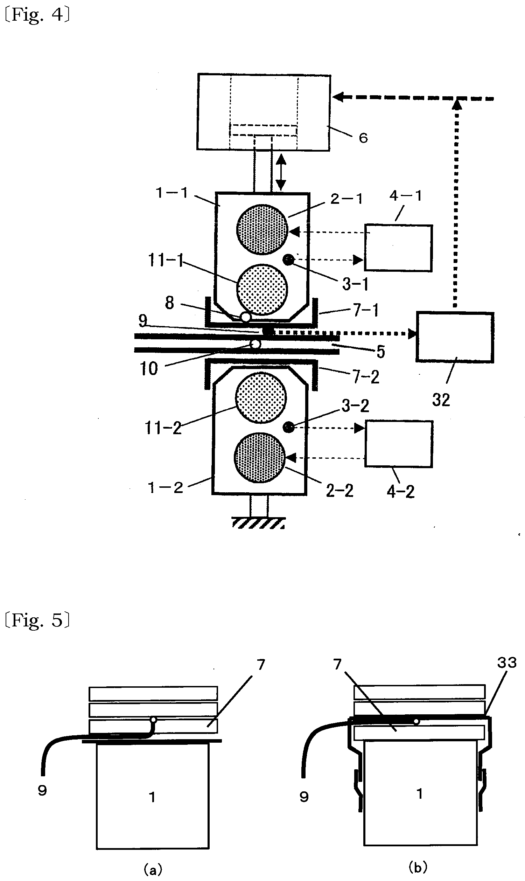

and k is k = RC defined by primary delayed electric circuit constructed by resistors and condensers. In the circuit diagram of Figure 4, R = R1 + R3 + r1, C = C3. t represents time.

In the case of both sides heating at the same temperature, T2 = T1, and therefore, temperature response of bonding face results in the response of Figure 3 (a) which is determined only by the heat source temperature T2, finally constricts to T2.

When an anvil is rendered at room temperature, T1 = T3, it becomes like primary delayed Figure 3 (b).

n is a factor determined by heat conductivity of the material facing the heat bonding face. Provided that the materials facing are identical, n = 1/2.

Commonly, although heating is classified into both sides heating and one side heating, they are only different in temperature setting of each heating body. Theoretically, when it understands that both sides heating and one side heating are limiting conditions of setting temperature, practical defects can be dealt systematically.

Explanation of characteristics of both sides/one side heating

(1) Characteristics of both sides heating

It is press heating by a pair of metal bodies including heating source, and bonding faces are heated from the surfaces of a work by utilizing heat conduction of the material. It has characteristics that bonding face temperature is equilibrated with the surface temperature of heating bodies without influence of other factors such as environmental temperature by rendering contact face temperatures of the pair of the heating bodies with the material identical.

(2) Characteristics of one side heating

One side heating is constructed by a heating body on one side and a pressure pad at ordinary temperature without heating function on the other side, heat flow is one side flow passing through bonding faces in proportion to the temperature difference between the surface temperature of the heating body and the pressure pad at ordinary temperature. In an equilibrium state, it is equilibrated around 1/2 of the difference of the surface temperature between the heating side and the pressure receiving side. However, when heating time is lengthened, the surface temperature of the pressure pad is gradually elevated by the heat flow passed through the bonding faces. About 1/2 of the temperature elevation directly concerns the variation of bonding face temperature which gradually rises with heating time, and inhibits appropriate bonding face temperature control. Impulse sealing system belongs to one side heating.

Namely, the present invention provides a method of heat-sealing and a heat-sealing apparatus as defined in the appended claims.

[Effects of the Invention]

In the heat bonding (heat seal) in situ, transient heating in a high speed region is utilized for the purpose of ensuring productivity. Since instrumentation and control techniques capable of managing the parameter of heating temperature directly have not been completed in the high speed region, management of heating operation relying on time control is not appropriate. The invention capable of controlling the heating temperature directly in the high speed variation region has solved the conventional problems, and has improved the reliability and quality of heat seal techniques, and further, has ensured to achieve ultimate problem of sealing and easy opening.

[Brief Description of the Drawings]

[Figure 1] is a graph indicating a relationship between bonding strength and bonding face temperature.

[Figure 2] is a graph indicating a relationship between welding face temperature where surface temperature of heating body is employed as a parameter and press bonding time.

[Figure 3] is an explanatory drawing explaining heat flow and temperature distribution at both sides heating and one side heating.

[Figure 4] is a schematic view illustrating a schematic construction of a heat sealing apparatus of heating jaw system to which the invention is applied.

[Figure 5] is a schematic view illustrating two mounting states of interface temperature sensor in Figure 4.

[Figure 6] is a plan view and side view illustrating the embodiment shown in Figure 5 (b).

[Figure 7] is a graph showing a relationship between interface temperature and welding face temperature obtained by the method of the invention.

[Figure 8] is a circuit diagram where heat transfer phenomenon is converted to electric circuit.

[Figure 9] is an explanatory drawing explaining a manner to adapt the method of the invention to the intermittent motion of the heating jaw system.

[Figure 10] is a drawing illustrating a constructure of a conventional impulse sealer.

[Figure 11] is a graph showing temperature variation of heating element, welding face and anvil, obtained by the impulse sealer.

[Figure 12] is a graph indicating a temperature variation in repeat sealing using a conventional impulse sealer.

[Figure 13] is a drawing illustrating construction of an impulse sealer to which the invention is applied.

[Figure 14] is a drawing indicating the temperature control mechanism thereof.

[Figure 15] is a graph showing temperature variation (controllability) of heating element, outer surface of cover material and bonding faces between works in repeat sealing using an impulse sealer to which the invention is applied.

[Figure 16] is a drawing illustrating conditions to which the linear heat seal of the invention is applied.

[Figure 17] is a graph showing a relationship between interface temperature and welding temperature obtained in an example of the invention.

[Figure 18] is a graph showing temperature variation in repeat sealing obtained by an example of the invention.

[Mode for Carrying Out the Invention]

Film and sheet, which are heat seal materials, are enough to have a heat-sealable layer, and may be formed of single layer or plural layers. The material of the heat-sealable layer may be any material capable of heat-sealing, and in general, it is polyethylene, polypropylene, ethylene copolymers or the like. In addition, not crystallized polyethylene terephthalate and the like are also usable. The thickness of the heat-sealable layer is usually about 3 - 200 $\mu$m, typically about 5 - 150 $\mu$m.

The film or sheet composed of plural layers is constructed by laminating two types or more materials in order to improve printability, resistance to breakage, or gas barrier ability, to adjust rigidity of bags, to prevent adhesion of the material in softened state to the heating plate, or the like, and at least, an adhesive layer (sealant) which is the heat-sealable layer, is allocated to one of the surface layers. The material of the surface layer which becomes the outside layer of the bag, is selected from the materials wherein plasticization does not occur in the temperature range where the heating of the adhesive layer is applied.

The thickness of the film or sheet composed of plural layers is usually about 2 - 200 $\mu$m, typically about 20 - 120 $\mu$m.

As representative heat seal systems, there are heating jaw system where heating bodies are used, and impulse sealing system where a heating element using as the heating body is pressed and electricity is charged to heating, and the present invention can be applied to both systems.

The heat sealing apparatus of the heating jaw system is fundamentally composed of a pair of heating bodies, their actuating mechanism, and heating mechanism. The heating bodies are fundamentally the same as those of a conventional heat seal apparatus, and the couple of the heating bodies are constructed and arranged so that the heating surfaces are located in parallel, and therefore, upon heat-sealing, pressing is carried out with uniform pressure in the whole area. The heating surface is usually in plane. At least, the width of one heating surface is made only to heat the heat seal portion to be formed on the heat seal material. The other heating surface may be identical, or may be broader than that to be functioned as a pedestal. The material to be used is having a high heat conductivity, such as copper, aluminum, brass or stainless steel.

The working mechanism, that nips or releases the heat seal material by the heating bodies, may be the same as a conventional heat seal apparatus, and the working may be conducted by moving only one heating body or by moving both.

The heating mechanism to heat the heating bodies may also be the same as a conventional heat seal apparatus, and commonly, electricity is used.

A schematic construction (sectional view) of a heat sealing apparatus of heating jaw system to which the invention is applied, is shown in Figure 4. It is constructed by a pair of heating bodies (heating bar) each of which includes a heater 2. Each heating body 1-1, 1-2 is equipped with a temperature sensor 3 which is connected to a temperature controller 4, and temperature is controlled individually. An automatic pressing apparatus 6 is attached to at least one of the heating bodies 1, and it acts batchwise motion synchronized with the motion of the body of packaging machine. An air cylinder is used as the automatic pressing apparatus 6, and moves the heating body 1-1. The work 5 is put in and taken out synchronized with the motion of the jaw. Heretofore, the heating body is provided with a Teflon (registered trademark)-impregnated glass wool woven fabric on the surface as a cover, as a measure against burning. To replace it, thin flat Teflon sheet or flat nylon sheet where heat flow is even, is applied as the cover material 7.

A heating pipe 11 is embedded between the heater 2 and the surface so that heat generation temperature of the surface of heating body becomes even.

Temperature sensors 3-1, 3-2 are built-in each heating bodies 1-1,1-2, and further, a heating body surface temperature sensor 8 and an interface temperature sensor 9 attached to the outer face of the cover material 7-1 are provided.

The interface temperature sensor 9 is newly introduced by the invention, and only the top portion of the sensor is put on the interface through a minute hole bored into the cover material. The size of the aperture of the hole is to expose the top portion of the sensor to the heat seal material, and usually, is about 0.05 to 0.1 mm. As a result, only a minute trace of about 0.1 mm is formed on the heat sealing face.

A mounted state of the sensor is illustrated in Figure 5 (a). Since the heating body 1 is made of metal, an insulation film is laid on the heating body 1 in order to protect the lead wire of the sensor electrically. The applied insulation film is a polyimide film ("Kapton", du Pont) 0.005-0.01 mm thick.

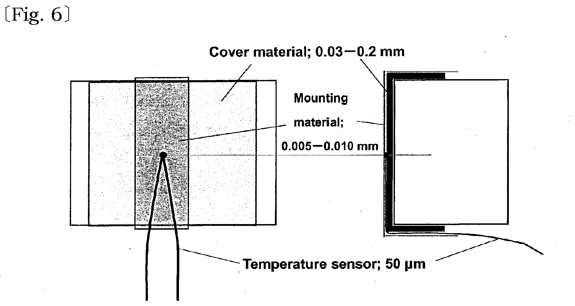

Alternatively, the interface temperature sensor 9 is mounted on the surface of the cover material 7 by a stretched very thin mounting film 33, as shown in Figure 5 (b) and Figure 6. So that the influence of the mounting film on the heat flow in the cover material can be neglected, the thickness of the mounting film is very thin, such as 0.005 to 0.01 mm, and preferably one fifth of the cover material or thinner than that. The applied mounting film is also the polyimide film ("Kapton", du Pont) 0.005-0.01 mm thick, and fixed by immobilizing the end of the film using a heat-resistant adhesive tape.

The former is excellent in detectability, but not easy to mount the sensor. Although the latter is slightly inferior in detectability, it is superior in the easy mounting.

The signal of the interface temperature sensor 9 is sent to an interface temperature controller 32, and thereby, the automatic pressing apparatus 6 is controlled.

As the welding face temperature response of heating jaw system, there are three types, i.e. converging equilibrium temperature (Tc), 95 % arrival point (Tb) and high speed rising region (Ta) of transient response, as shown in Figure 2. Among the definitions of three types, at present, the type where temperature value can be dealt directly, is only the equilibrium temperature. Actual heating method to arrive at 95 % equilibrium temperature is time control where temperature variation is ≒ 1 °C / 0.1 s, and although it is approximate, practical accuracy (1- 2 °C) can be ensured.

However, today, in order to ensure production per unit time, the high speed rising region where heating time is shorter than the 95 % arrival time by one-several-th, is commonly used. Temperature rising characteristics in this region is about 100 °C / s, ≒ 10 °C / 0.1 s. In the present time control, the difference from set value in control greatly exceeds the guarantee region of heat bonding properties, and causes defects to have to make too much of agglomeration bonding.

For the utilization of high speed rising region, it is necessary to set a high temperature heating at a temperature 1.5-2.5 times higher than the heating temperature of 95 % response. (see Figure 2)

Since the temperature of the heating body is set in a temperature zone much higher than the melting point of packaging material, while stopping for a short time, such as 10 seconds, the material stayed in the apparatus is melted to adhere to the heating body, etc. to contaminate the apparatus.

In the heating jaw system, as shown in Figure 2, a short heating time (Ta) heating method is usually employed in order to raise production speed, where set temperature of heating bodies is raised to render starting up fast. However, in this process, heating relys on time control, because the temperature variation in transient stage cannot measured directly.

It is desired to develop a control method (simulation) where actual heating temperature is employed as an indication, instead of the time control. The present invention makes possible to solve this problem.

Summary of the development of the invention into the heating jaw system is explained by referring to Figure 4. The surface of heating bodies 1-1, 1-2 is covered by a cover material 7-1, 7-2. A minute interface temperature sensor 9 is attached continuously to the surface of either cover material. A welding face temperature sensor 10 is provided only at a time of inspecting the response in a laboratory test.

Measurement of surface temperature response of cover material

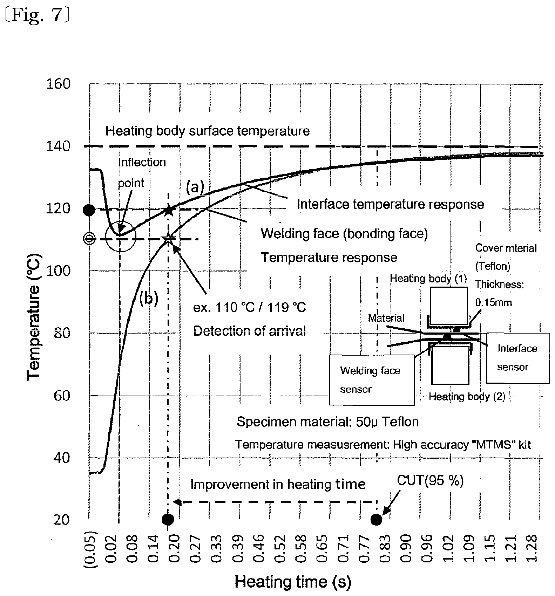

In the invention, welding face temperature response is simulated by noticing that the surface temperature (interface temperature) of the cover material 7-1, 7-2 (e.g. 0.15 mm Teflon smooth sheet) of heating bodies descends by the heat flow toward the work. An example of the measurement is shown in Figure 7.

In the measurement, a Teflon smooth sheet or nylon smooth sheet 0.03 - 0.2 mm in thickness was selected as the cover material 7, and the response of the surface temperature 8 of heating body, the contact interface between the cover material and the work 5, and further, the welding face (bonding face) of the work were examined. The graph (a) in Figure 7 shows a response of the contact interface temperature sensor 9 between the cover material 7 and the work 5. The graph (b) shows a response of the welding face temperature sensor 10.

In the measurement of this example, the spaces for measuring the welding face and interface temperature are tens μm. Moreover, a high instrumentation performance capable of measuring 95 % response with a resolution ability of 0.05 s or less is required. In the measurement, a temperature recording device with a resolution ability of 0.001 s was used where a K thermocouple of 50 μm diameter was applied.

Welding face temperature response by surface temperature monitor of cover material since the surface of the cover material before working was exposed to room temperature to radiate heat, the surface temperature of the cover material is indicated a lower value than the surface temperature of heating body. (about 130 °C when controlled at 140 °C) (see Figure 7)

When a work at ordinary temperature comes into contact with the surface of cover material A 7-1 by pressing, the interface temperature sensor 9 detects a sharp descending. Then, the interface temperature rises to be asymptotic to the surface temperature of heating body. (see Figure 7 graph (a))

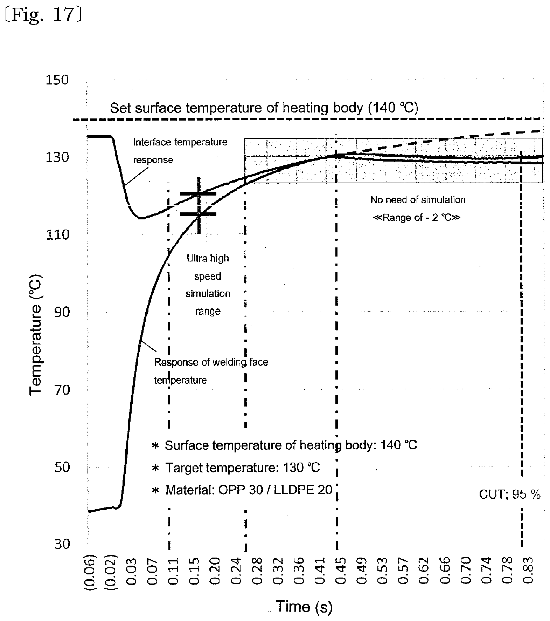

The welding face temperature of the work begins to rise simultaneously, and rises to be asymptotic to the surface temperature of heating body. When the difference between the response of welding face temperature and interface temperature arrives within 2 °C, direct control of welding face (bonding face) temperature becomes possible by employing the interface temperature value as the indication. In this example, an appropriate region is from the vicinity of 0.4 s. Since CUT; 95 % in this example is in the vicinity of 0.8 s, a greater shortening of time can be made than a conventional CUT; 95 %, and the effectiveness of the invention can be understood. Detailed explanation is made in a working example (Figure 17).

Although welding face (bonding face) temperature cannot be detected directly in the manufacturing process, the graph (a) in Figure 7 can be continuously observed by attaching a minute sensor to the interface. The graphs (a) and (b) occur by the same heat flow phenomenon. Accordingly, by the observation of graph (a), welding face temperature response can be grasped directly. The measuring techniques is the basis of the invention.

Principle governed by interface temperature

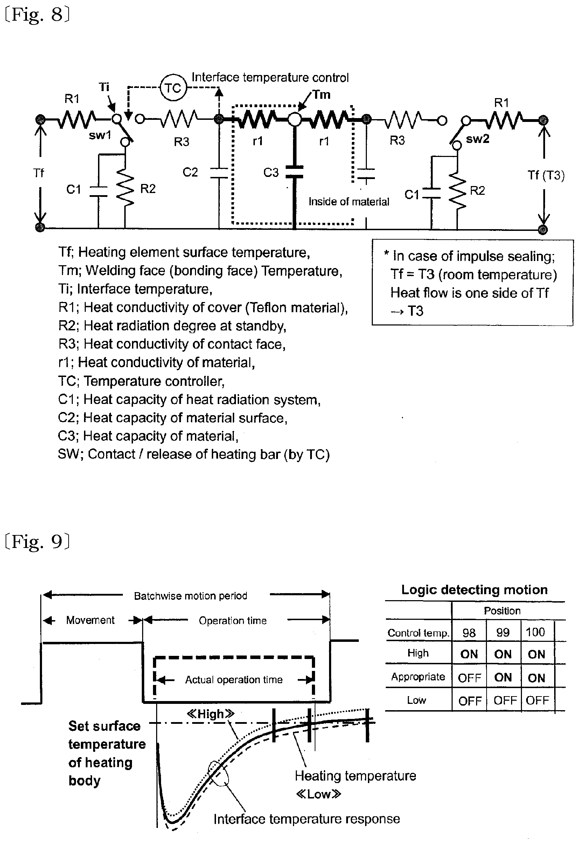

The characteristics of heat transfer phenomenon in heat bonding are analyzed by replacing the phenomenon with an electric circuit. The response of the heat flow phenomenon in Figure 7 is transferred to an electric circuit, and shown in Figure 8.

In a released condition prior to pressing, provided that heat radiation resistance into atmosphere is denoted R2, and heat transfer resistance of cover material 7-1 is denoted R1, the surface temperature of the cover material 7-1 is expressed as $Tf \cdot R2 / (R1 + R2)$, and therefore, it is lower than the surface temperature of heating body.

When the heating body 1 acts jaw motion (switching SW in Figure 8) to conduct press bonding, the heat flow from the heating bodies 1-1, 1-2 is charged into the heat capacity C3 of welding face through the heat transfer resistance R1 of cover material 7, contact resistance R3 and heat resistance r1 of work 5, welding face temperature is generated by almost primary sending response. In the jaw system, similar heating is also made from the other side, and welding face is asymptotic to the surface temperature of the heating body which is a heat source to equilibrate with Tm.

In the case of heating where the set temperature of the heating body 1-1 is different from the heating body 1-2 (so-called one side heating), one side is at T3 which is room temperature, etc. In this case, heat flow responds to (Tf-T3) and becomes one way from the heating body 1-1 to the heating body 1-2. Therefore, provided that the surface temperature of heating body 1-2 is not changed by the heat flow, the welding face temperature response is expressed as

$$(Tf-T3) \cdot [(R1+R3+rl) \: / \: 2 \: (R1+R3+rl)]+T3 = (Tf-T3) \cdot 1/2+T3 \qquad (3)$$

Impulse sealing corresponds to this.

The response of interface temperature 9 indicates a transient response between thermal resistance R1+R3+r1 and mainly heat capacity C3. As can be seen from an analogous electric circuit, welding face temperature constitutes a part of interface temperature response, and correlated.

Accordingly, it was found that welding face temperature response can be simulated by monitoring the surface temperature response of cover material which can be measured continuously.

Selection of thickness of cover material

The thermal resistance R1 of cover material participates directly the detection of heat flow. When the value increases great, temperature descending becomes sharp. Therefore, the detection sensitivity is high. However, when the thermal resistance is great, the temperature of heat source is raised by the suppression of heat flow, and therefore, undesirable. It is selected so that R1 / (R1 + R3 + rl) is made a rate of 1/4- 1/5.

In Figure 7, it is shown a procedure to control welding face temperature in the vicinity of 0.2 s of heating time to 110 °C, as an example. From the model data, in the case that the interface temperature of cover material is 119 °C , the welding face temperature becomes 110 °C. Heating operation using temperature as an indication can be conducted by that when the interface temperature detects the set value of T< 119 °C which is obtained by subtracting the delay of the work of heating jaw, pressing is released by the operation of automatic pressing apparatus actuated by the output of the interface temperature controller 32.

Since the model data varies by the change of work, laboratory data for each work are stocked, and referred to them.

In the selection of the heating time around 0.4 s or more, it can be seen that since the interface temperature almost agrees with the welding face temperature response, the automatic pressing

apparatus 6 can be operated by the detected temperature signal without referring to the model data.

The selection of the control time zone can be adjusted by the change of the set temperature (T1, T2) of the heating bodies 1-1, 1-2.

Most of conventional intermittent motion type packaging machines are driven by one power source, and driving mechanism of the heating jaw is constructed by cam / link. Therefore, in order to control pressing motion by the detection of interface temperature of the invention, it is necessary to provide individual operation units.

Means of adapting the invention to intermittent motion Thereupon, it was devised an application method of the invention to the interval of the intermittent motion.

The periodic speed of the intermittent motion is frequently set by the production schedule on each occasion.

Equivalent effects to the release operation of pressing operation can be gained by adjusting heating body surface temperature so as to arrive at the set temperature at the finish point of the intermittent motion.

The device is characterized by that almost 100 % of intermittent motion intervals can conform automatically to heating operation, and unnecessary heating rendered to a high temperature can be prevented. The construction of the method is shown in Figure 9.

Device of meeting control temperature with intermittent motion time

As shown in Figure 9, in the packaging machine in situ, it is rare to operate pressing operation independently, and the pressing motion is restricted by the heating time determined by cam /1 ink mechanism to be met the intermittent motion of the machine. High temperature setting more than necessary heating body temperature can be avoided by meeting control temperature with 100 % arrival time of intermittent motion.

For example, position signals of 98, 99, 100 % in intermittent motion are received from a rotary encoder managing the intermittent motion, an AND logic of interface temperature and set point detecting signal was made.

The AND logic of three signals of the rotary encoder and output of interface temperature device is expressed as a matrix shown in Figure 9.

In the experiment of this example, when 98 -100 % and a state of turning the logic of the output of desired control temperature ON were observed, the set values of control temperature of two heating bodies were adjusted so that logic outputs of 99 and 100 % became a state of ON by repeating increase or decrease several times manually at unit of 1 °C. In a practical production work in situ, an indicator of logic output is attached to the control system, setting is changed manually referring to this, or automatically.

The present invention can be applied to impulse sealing system.

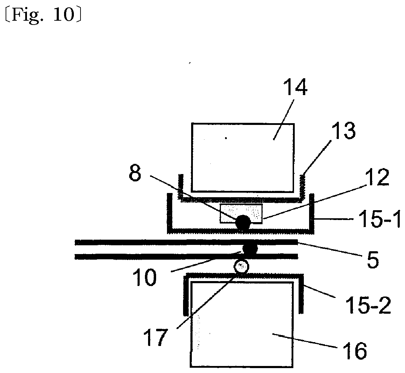

A construction of a conventional impulse sealer is illustrated in Figure 10.

A heating element 12 is fixed to a cooling heat radiation material 14 through a thermal insulating material 13 made of Teflon (registered trademark). The other face of the heating element 12 is covered with Teflon material (Teflon impregnated glass wool woven fabric) 15-1 to reduce burning of melted piece of work 5. An anvil 16 made of rubber on the other side is also covered with Teflon material (Teflon impregnated glass wool woven fabric) 15-2 to prevent burning of melted piece of work 5.

To the heating element 12 of an impulse sealer on the market, a nichrome wire is applied as heating resistor, and heat generation and heating is carried out by applying electricity step wise. Because the heating resistor is a thin plate (about 0.15 mm), it is characterized by small heat capacity and high speed heating of 100 °C / 0.5-1 s.

Impulse sealing is different from the jaw system where already heated heating bodies are pressed, and heating and pressing are conducted simultaneously by applying impulse-shaped electric voltage. Although the temperature rise of heating element is almost primary delayed response against applied electricity, lamp-shaped input is carried out against work where linear heating is conducted. The time limit system similar to the aforementioned Ta is applied to desired heating temperature control.

In the impulse sealing system, the supply time of electricity is controlled by time limit system using a timer, and the operator controls limiting time by judging the suitability of the bonding state of finished specimens based on tensile test or visual observation at each operation. To ensure quantification is a solving problem. The impulse sealing has a character that since heat capacity of heating element is small, heating properties (speed) varies by the influence of heat load capacity mainly based on the thickness of work.

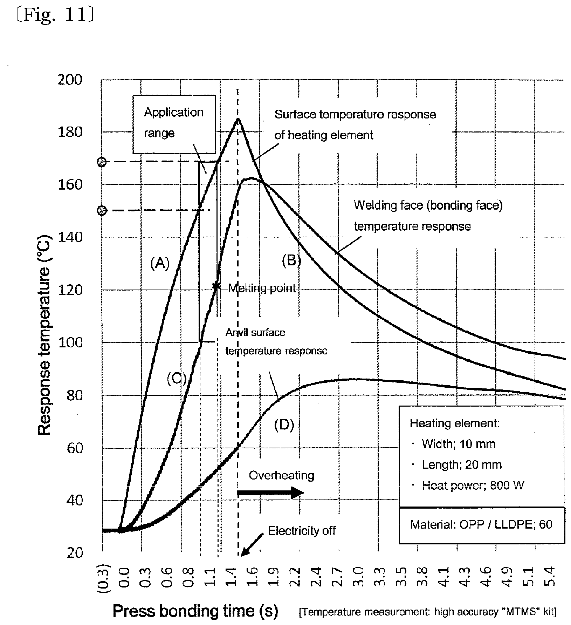

Figure 11 indicates an example of welding face temperature response of an impulse sealer measure by using a "MTMS" kit. As the measuring points, a temperature sensor was attached to each the surface of heating element 12, the space between two sheets of work 5 and cover material 15-2 of anvil 16 in the impulse sealer of Figure 10, and surface temperature of heating element 12, welding face (bonding face) temperature and the surface temperature of anvil 16 (elastic body) were measured respectively.

In the example of measurement, 15 V transformed from alternating current 100 V power source was applied to the hating element 12. Supplied electric current was 53 A, and heat release value was ≒ 800 W. Since the temperature in equilibrium state of this apparatus became 200 °C or more, the temperature zone to be applied to heat bonding corresponds to the high speed rising Ta illustrated in Figure 2.

As to the work, the temperature varies as graph (A) in Figure 11 which is lamp-shaped heating where temperature rises in straight. Since applied electricity is released at the set time arrived, residual heat in heating element radiates through cooling heat radiation material 14 and temperature descends as graph (B). Welding face temperature response becomes the response to linear lamp-shaped input as graph (C).

In this one side heating, (heating temperature - room temperature) / 2 + room temperature is the model welding face temperature. In the response zone around 1.0 s, the welding face temperature is in the state of one side heating formula (1). In the one side heating, heat flow is in one-way from heating element 12 to anvil 16, and the surface temperature of anvil 16 rises as graph (D).

An inflection point (melting point) caused by melting can be seen around 120 °C / 1.2 s in the measured data, and heated face is in paste-shaped after 1.2 s. The neighborhood of 120 °C is upper limit temperature of heating. Namely, since around 120 °C is the melting point of sealant which is liquefied, the specimen material is expected to be heated to 115 - 120 °C . When temperature exceeds the melting point, heat conduction varies to accelerate temperature rising. The utilization of this temperature region causes production of polymer beads, pinholes and edge tear.

The surface temperature of the anvil rises together with start of heating. After heating stops, it continues to rise by the heat inertia, and then, turns to descend by natural cooling.

In the impulse sealing with time limit heating by supplying electricity, temperature at the next start varies upon starting by the heat storage in heating element 12 and in anvil 16 during repeated operations. By the influence of this, when the same heating time (time of supplying electricity) is controlled exactly, controlled temperature varies within 20 °C. Accordingly, there is a fault in principle in repeating continuous use at an interval of a short tune when cooling has not been completed, that even through exact time limit control is conducted, heating body temperature is not identical. It was found that the time limit control is disqualified.

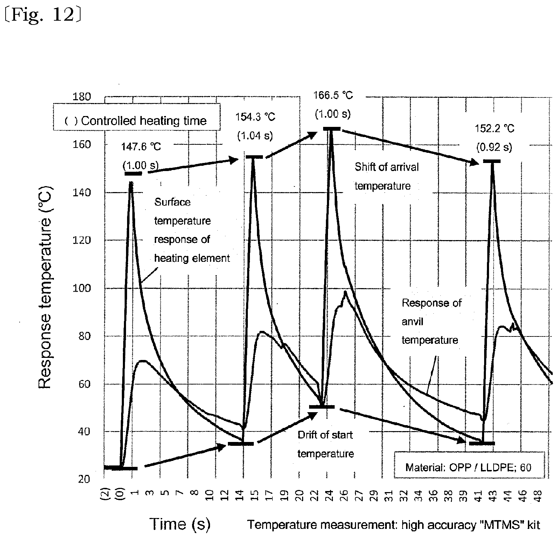

Figure 12 shows an example of temperature drifting induced in repeat operation of a commercial machine by time limit control. From the measured results, 146 °C / 1.00 s, 154.3 °C / 1.04 s, 166.5 °C / 1.00 s, 152.2 °C / 0.92 s were obtained. Although the variation of time limit performance within the degree of 0.1 s, temperature values were dispersed in a range of 10 °C. The fault of the present state could be grasped clearly.

The response example of Figure 12 is in the case that starting temperature of heating element in a commercial machine is room temperature. The response of heating element 12 after applied electricity is released, is observed, a time is taken for cooling until room temperature, and drifting occurs. The property is a barrier to repeat operation at a short time interval in the time limit system.

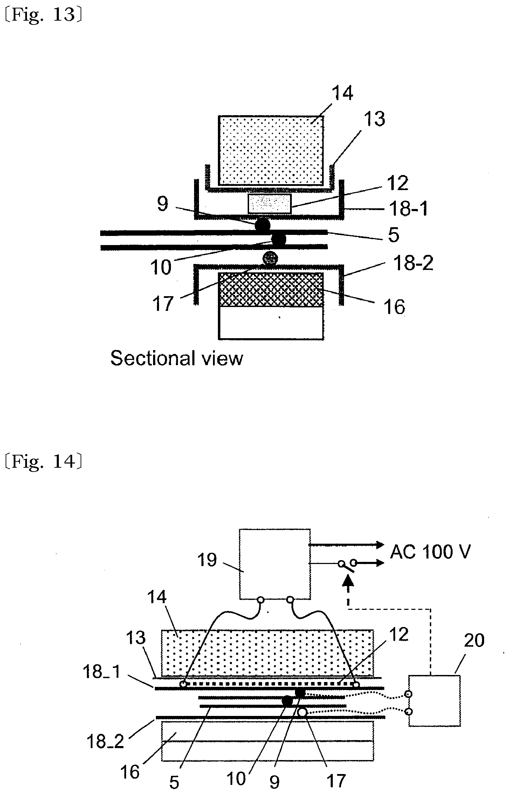

In the invention, in the apparatus of Figure 10, a cover material 18 is disposed on heating element 12 in the impulse sealer instead of the cover material 15. Actually, a smooth Teflon sheet or smooth nylon sheet 0.03 -0.2 mm in thickness is used as the cover material 18 instead of a conventional Teflon impregnated glass wool woven fabric. An interface temperature sensor (thermocouple) 9 of about 50 $\mu$m diameter for the detection of interface temperature is continuously placed on the surface of cover material 18 on the side of contact face. A temperature sensor 17 of anvil is also continuously put. The welding face temperature detection sensor 10 is for the measurement of properties of welding face temperature response, and it is not set in a working machine. A schematic construction to which the invention is applied is shown in Figure 13.

A cascade temperature controller 20 is provided which receives the output signals of interface temperature sensor 9 and temperature sensor 17 of anvil 16, and thereby, the switch of transformer 19 sending electricity to heating element 12 can be controlled. The structure is shown in Figure 14.

In the system of the invention, when reaching a desired temperature, electric source for heating is released (irrespective of time) to stop heating, and the system is a control method not affected by the initial temperature at starting of heating element 12. The auxiliary operation to change heating time is needless, and the assistance of frequent inspections for bonding state is made minimum.

When the type of product is converted to change the thickness and material of work, temperature rise characteristic varies according to the difference of heat capacity. This directly affects to induce discrepancy in the time limit system.

Heretofore, the suitability of pressing time was judged by the bonding state of finished specimens based on tensile test or visual observation, and the pressing time was controlled relying on a rule of thumb. Temperature was set high so that bonding strength becomes high (melting state), because of being afraid insufficient heating.

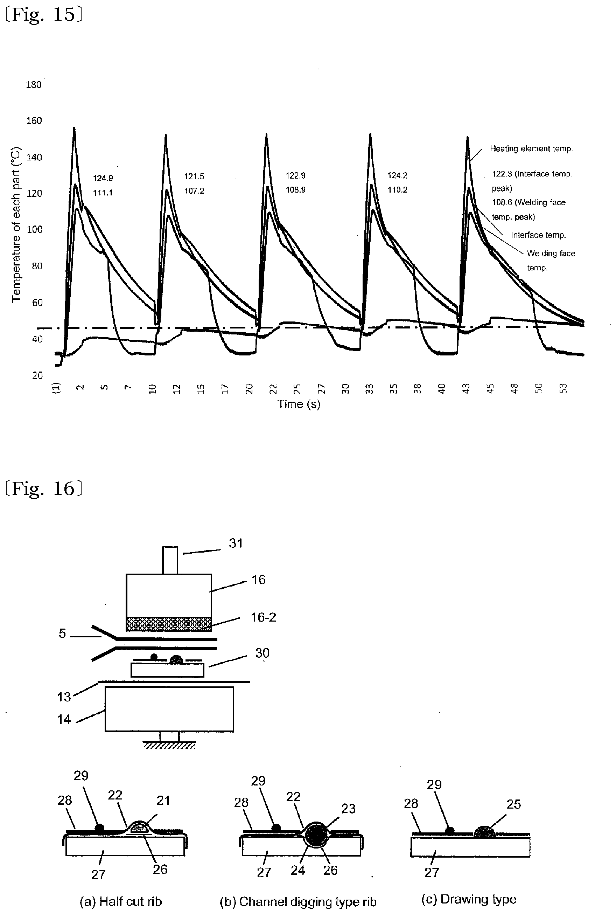

A measurement example using the apparatus shown in Figure 13 and Figure 14 is shown in Figure 15. The result of controlling interface temperature and response value of welding face temperature are enumerated in the graph. By detecting the temperature response of cover material 18 and contact face of work 5 directly, temperature detection point approaches welding face temperature point to remove the cause of variation. As a result of control, variation of interface temperature becomes 124.9 - 121.5 °C (3.4 °C) and variation of welding face temperature becomes 111.1-107.2 °C (3.9 °C).

Because impulse sealing is conducted by one way heating, desired value cannot be controlled directly. Like the example shown in Figure 15, it is important that the results of control are almost the same in every time.

According to the repeat operation of the method of the invention, overheating could be avoided, because the heating of heating element 12 was maintained in a proper heating range. Therefore, heat storage in the anvil portion could be minimized.

The temperature variation of anvil is about 3 °C through the repeat of the operation each for about 10 s.

Method of correcting variation of anvil temperature

The welding face temperature of work is determined by the temperature difference between heating element temperature T2 and anvil temperature T1 (see formula (1)). If anvil temperature T1 varies, welding face temperature is not constant, even controlling heating portion temperature T2 precisely. Practically, the set value of temperature controller 20 is corrected with cascade control by the output signal of anvil temperature sensor 17 by increasing or decreasing about 1/2 of variation portion of T1 (see Figure 14).

By the invention, welding face temperature can be controlled / managed within 3 °C also in the method of impulse sealing.

Improvement in detection method of high speed temperature response

The heating time zone which is the subject of the invention is [0106] approximately 0.2 s or more.

In order to detect high speed variation in a short time, an instrument capable of dealing with the variation is needed.

For example, the temperature rising speed of the heating element of an impulse sealer was 25 - 150 °C / 1.0 s. The temperature rising property is 125 °C / s. Namely, the temperature rising variation is 12.5 °C / 0.1s, 1.25 °C / 0.01 s. Generally, temperature controllers used are of digital type, variation of detecting temperature occurs by the sampling period. By varying the sampling period 0.01 s, 0.02 s, 0.05 s, trial calculation of detecting temperature variation was conducted.

The results of operation are indicated in Table 1. In order to raise accuracy of temperature control, it is necessary to choose a controller having a sampling period of 0.01-0.02 s. It was found that sampling period of 0.01 s is preferred.

In an experiment of practical control system, there is an overrunning of welding face temperature of 0.01 s after heating stopped, and it was found that temperature deviation was about 2 °C. This value was the delay of control system, such as switch motion. The deviation is always constant, and can be treated by adding constant set value correction.

[Table 1]

| Results of variation in operation of sampling period and detecting point temperature (Application of example of 25 - 150 °C / 1 s) | |
| --- | --- |
| Sampling period | Variation of detected temperature (°C) |
| 0.01 | 1.25 |
| 0.02 | 2.50 |
| 0.05 | 6.25 |

Development of single linear seal into impulse sealing

Simultaneous achievement of sealing and easy opening was an ultimate solving problem in the heat sealing technique for a long time (presented in the establishment of ASTM F88 in 1968).

In the conventional impulse sealing, it was difficult to control welding face temperature response within 4 °C, and selection of agglomerate bonding was the best to be conducted.

By applying the invention, more appropriate temperature control can be carried out, the single linear sealing can be made even by impulse sealing.

By adding a single linear rib to around the center of heating element, a single linear seal (Filigree Seal (JP 5779291) capable of both sealing and easy opening simultaneously can be provided.

The single linear seal was developed by the inventor previously, and it has a composite heat seal structure wherein a linear seal is added to a band-shaped seal in the longitudinal direction, and by the linear seal, a step portion formed by folding, such as in a gusset bag, can be ensured sealing.

A construction of a single linear seal unit 30 wherein a single linear rib was added to heating element 27, is shown in Figure 16.

In the single linear seal unit 30, a single linear rib (height: 0.1-0.6 mm) to heating element 27 is added by the following method.

(1) A wire having the same material (nichrome) as heating element 27 is selected.

(2) (In the case of 0.3 mm in height), a wire 0.9 mm thick is processed into half cut, i.e. in a form of semicircle 21, and it adheres to be fixed on a heating element 27 in the position of about 70 - 80 % of the width in the cross direction by a thin nylon membrane 22. The end is connected to heating power supply in parallel to heating element 27 (Figure 16 (a)).

(3) A channel 24 in a half circle about 0.5 mm in depth is formed on heating element 27 at around the center in the longitudinal direction, and wire 23 0.8 mm in size is fitted thereinto, and adheres to be fixed by a thin nylon membrane 22. The end is connected to the heating power supply in parallel to the heating element (Figure 16 (b)).

(4) The whole body of heating element is processed into a prescribed form as an integrated drawing material 25 (Figure 16 (c)).

(5) It is possible to provide an insulating membrane 26 between wire 21, 23 and heating element 27 in order to make heating from rib portion and plane portion uniform. Alternatively, the surface of wire 21, 23 or the surface of heating element 27 may be covered with thin insulating coating.

(6) subsequently, a Teflon smooth sheet 0.03-0.2 mm in thickness is stuck on the plane portion to provide a heat flow detecting cover material D 28.

(7) A thermocouple 29 of about 50 $\mu$m diameter for detecting interface temperature is stuck on around the center of the surface of cover material.

(8) An elastic body 16-2 having a hardness of A 50-80 and a thickness of 3-5 mm is disposed on the anvil 16 in order to absorb unevenness at the step portion.

[Examples]

(Example 1)

Performance test for application to heating jaw system

The performance was examined by using the construction shown in Figure 4 and setting practical conditions.

(1) Size of heating jaw; 40 $\times$ 40 $\times$ 200 mm (contact width with work 15 mm)
(2) Material of heating jaw; brass
(3) Heater; 400 W, 10 mm diameter
(4) Heating pipe 10 mm diameter disposed near the surface of heating body
(5) Temperature control of heating body; 2 position PID control
(6) Cover material; 0.05 mm smooth Teflon sheet
(7) Interface temperature sensor; 50 $\mu$m, K thermocouple
(8) Interface temperature controller; high speed ON-OFF control
(9) Material of work; OPP 30 / LLDPE 20
(10) Setting of welding face temperature response (arrival temperature); 130 °C
(11) Pressing pressure; 0.2 MPa
(12) Inspection of sealing condition; flaw detecting solution was applied.
(13) Temperature response measurement at each inspection point; "MTMS" kit (JP 3465741, JP 4623662) was applied.
(14) Inspection of bonding state; tensile test, leak test by flaw detecting solution

By referring to Figure 17 which indicates an example, the following characteristics of the invention were found.

(1) Since a heating pipe was disposed in the heating body, temperature unevenness in the longitudinal direction was rendered within 1 °C, and the heating ability of heat sealing faces became uniform.
(2) The surface temperature of the cover material detecting heat flow was 135 °C at waiting time, while the heating body surface temperature was set 140 °C.
(3) Interface temperature descended to around 115 °C from immediately after pressing start, and then rose continuously. The quantity of once descent varies according to the heat capacity (thickness) of work.
(4) The welding face temperature begins to rise from immediately after pressing. When pressing time is 0.27 s or more, the difference between interface temperature and welding face temperature response becomes within 2 °C .

Since interface temperature value and welding face temperature value are equivalent, the welding face temperature can be approximately the interface temperature.

(5) The CUT; 95 % of welding face temperature in this heating was 0.81 s.

(6) At the point of 0.44 s, the set value of interface temperature response (≒ welding face temperature response) of 130 °C was detected, and the motion of jaw was released. Overrun was rare, and welding face temperature was stopped at 130 °C.

(7) It was confirmed that welding face temperature can be controlled directly under a short time heating condition of 0.44 s.

(8) When a control of 115 °C is conducted under the same heating conditions, interface temperature of 121 °C is designated as the control point and the jaw is released with (at an interval of ≒ 0.17 s referring to the simulation data of interface temperature response and welding face temperature response.

(Example 2)

Example of application to impulse sealing

In the impulse sealing, electric voltage in step-shaped is applied to the heating element at each operation, and temperature elevation of the heating element is utilized. Therefore, heating is not step-shaped but lamp-shaped.

Impulse sealing is carried out by one-way heating where one side is heated.

Upon applying the invention to impulse sealing, a method of simulating temperature response of bonding face of work was devised by disposing a cover material 18 on the surface of heating element, setting a minute sensor on the surface of cover material 18, and detecting heating flow supplied to work.

Tests were carried out by applying the following conditions to the construction illustrated in Figure 13 and Figure 14.

Test conditions

(1) Heating element: width; 10 mm, thickness; 0.15 mm, heating capability; ≒ 800 W (100V AC)

(2) ON-OFF operation of heating element: relay contact (electricity supply OFF by detecting control point; motion delayed time ≒ 0.01 s)

(3) Temperature controller: sampling period; digital thermometer of 0.01-0.05 s

(4) Control of alternating current power supply: variable transformer

(5) Temperature response measurement at each inspection point: "MTMS" kit (JP 3465741, JP 4623662) was applied.

(6) Applied material: OPP (30 / LLDPE (20)

(7) Inspection of bonding state: tensile test, leak test by flaw detecting solution

(8) Pressing pressure: about 0.1 MPa

Test method

(1) A sealer to be tested is rendered under working conditions.

(2) Material (work) is placed under room temperature conditions.

(3) The sealer is worked at intervals of 10 - 30 s to form a drift state of the temperatures of heating element and pressure receiving plate (anvil).

(4) Temperature response of heating element, temperature response of pressure receiving plate, interface temperature response and welding face temperature response of work are measured by "MTMS" kit.

(5) Boundary face temperature between cover material and work is detected by a minute sensor of a high speed type temperature controller, and when arriving at a desired temperature, driving power source of heating element is rendered OFF by the output of controller.

(6) The performance of the invention is evaluated by the measured results of temperature responses at each portion.

Results of test

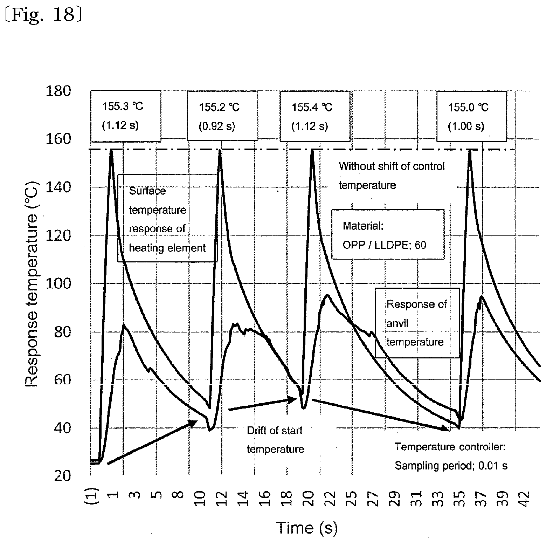

(1) Record of temperature responses at each portion measured by "MTMS" kit are shown in Figure 18.

(2) Under varying start temperature of anvil in the range of 40 - 60 °C, obtained control temperature / heating time were 155.3 °C / 1.12 s, 155.2 °C / 0.92 s, 155.4 °C / 1.12 s, 155.0 °C / 1.00 s.

(3) The heating times were 0.92 - 1.12 s, and it was confirmed that there is a variation in the arrival to desired temperature control value. It was proven that there is a defect in time control.

(4) From the results, welding face temperature can be controlled by the detection of interface temperature, by measuring interface temperature corresponding to desired welding face temperature, and correcting the interface temperature by overrun value and drift value of anvil temperature.

Measured results including inspections of welding face [0127] temperature response, interface temperature and surface temperature of heating element are shown in Figure 15.

(Example 3)

When repeat production operation was carried out with cascade control in a short time which corrects variation of anvil temperature, heat flow arrives at anvil to store heat, and temperature of anvil rises. Since the influence of anvil on one-way heating can be defined by the aforementioned formula (1), variation of anvil temperature can be corrected by continuous watching of anvil temperature.

(1) A minute sensor is always mounted on the surface of anvil.

(2) The standard value of anvil temperature was set 30 °C.

(3) Heating operation for 10 - 30 seconds is repeated.

(4) Indication of the anvil temperature immediately before the next operation is confirmed, and (Tx -30) / 2 was corrected to desired set value by hand. (Manual operation of cascade control)

(5) By the correction operation of (4), controlled results of welding face temperature could be restrained to the variation within 2 °C.

(6) By mounting a temperature sensor on the surface of anvil continuously, cascade control which changes the set value of controller by the temperature of anvil automatically can be provided. (see Figure 14)

[Description of Reference Signs]

| | |
|---|---|
| 1 | Heating body (heating bar) |
| 2 | Heater |
| 3 | Temperature sensor |
| 4 | Temperature controller |
| 5 | Heat seal material (work) |
| 6 | Automatic pressing apparatus |
| 7 | Cover material |
| 8 | Heating body surface temperature sensor |
| 9 | Interface temperature sensor |
| 10 | Welding face (bonding face) temperature sensor |
| 11 | Heating pipe |
| 12 | Heating element |
| 13 | Insulating material |
| 14 | Cooling heat radiation material |
| 15 | Cover material |
| 16 | Elastic anvil |
| 17 | Anvil temperature sensor |
| 18 | Cover material |
| 19 | Transformer |
| 20 | Cascade temperature controller |
| 21 | Rib processed into semicircle |
| 22 | Nylon membrane |
| 23 | Rib by wire |
| 24 | Channel |
| 25 | Rib in drawing material |

26    Insulating membrane
27    Heating element
28    Cover material
29    Interface temperature sensor
30    Single linear seal unit
31    Operation apparatus
32    Interface temperature controller
33    Mounting film

[Industrial Applicability]

The present invention renders heat sealing conditions exact, and is applicable widely to various heat sealing methods, such as heating jaw system and impulse sealing system.

**Claims**

1.    A method of heat-sealing using a heat-sealing apparatus which heat-seals a heat seal material (5) by nipping it between a pair of heating bodies (1, 1-1, 1-2), which comprises mounting a cover material (7, 7-1, 7-2) on the surface of at least one of the heating bodies (1, 1-1, 1-2) to be in contact with the heat seal material (5),
      **characterized in that** the method further comprises attaching a minute temperature sensor (9) to the surface of the cover material (7, 7-1, 7-2) on the side to be in contact with the heat seal material, and controlling the temperature of the bonding face of the heat seal material (5) by the temperature detected by the minute temperature sensor (9).

2.    A heat-sealing apparatus which nips a heat seal material (5) between a pair of heating bodies (1, 1-1, 1-2) to heat-seal it, wherein a cover material (7, 7-1, 7-2) is mounted on the surface of at least one of the heating bodies (1, 1-1, 1-2) to be in contact with the heat seal material (5),
      **characterized in that** a minute temperature sensor (9) is attached to the surface of the cover material (7, 7-1, 7-2) on the side to be in contact with the heat seal material (5), and an actuating mechanism which moves the heating bodies (1, 1-1, 1-2) forward and backward or a controlling mechanism which controls heating mechanism of the heating bodies (1, 1-1, 1-2), based on the detected result of the minute temperature sensor (9), is provided.

3.    A method of heat-sealing using an impulse apparatus which nips a heat seal material (5) between a heating element (12) and an anvil (16) to heat-seal it, which comprises

      mounting a cover material (15-1) on the surface of the heating element to be in contact with the heat seal material (5),
      attaching a minute temperature sensor (9) to the surface of the cover material (15-1) on the side to be in contact with the heat seal material (5), and
      controlling the temperature of the bonding face of the heat seal material (5) by the temperature detected by the minute temperature sensor (9).

4.    The method of heat-sealing as set forth in claim 3, wherein temperature of the anvil is detected to control set value of heating temperature in cascade system.

5.    An impulse heat-sealing apparatus which nips a heat seal material between a heating element (12) and an anvil (16) to heat seal it, wherein

      a cover (15-1) is mounted on the surface of the heating element (12) to be in contact with the heat seal material (5),
      a minute temperature sensor (9) is attached to the surface of the cover material (15-1) on the side to be in contact with the heat seal material (5), and
      a controlling mechanism is provided which controls quantity of electricity to be supplied to the heating element (12) based on the detected result of the minute temperature sensor (9).

6.    The heat-sealing apparatus as set forth in claim 5, wherein a minute temperature sensor is also attached to the surface of the anvil on the side to be in contact with the heat seal material, and the detected result of the minute temperature sensor is also sent to the controlling mechanism.

**Patentansprüche**

1. Verfahren zum Heißsiegeln unter Verwendung einer Heißsiegelvorrichtung, die ein Heißsiegelmaterial (5) heißsiegelt, indem sie es zwischen einem Paar von Heizkörpern (1, 1-1, 1-2) einklemmt, wobei das Verfahren das Anbringen eines Abdeckmaterials (7, 7-1, 7-2) auf der Oberfläche von mindestens einem der Heizkörper (1, 1-1, 1-2) umfasst, der in Kontakt mit dem Heißsiegelmaterial (5) sein soll,
   **dadurch gekennzeichnet, dass** das Verfahren ferner das Anbringen eines winzigen Temperatursensors (9) an der Oberfläche des Abdeckmaterials (7, 7-1, 7-2) auf der Seite, die in Kontakt mit dem Heißsiegelmaterial sein soll, und das Steuern der Temperatur der Klebefläche des Heißsiegelmaterials (5) durch die von dem winzigen Temperatursensor (9) erfasste Temperatur umfasst.

2. Heißsiegelvorrichtung, die ein Heißsiegelmaterial (5) zwischen einem Paar von Heizkörpern (1, 1-1, 1-2) einklemmt, um es heißzusiegeln, wobei ein Abdeckmaterial (7, 7-1, 7-2) auf der Oberfläche von mindestens einem der Heizkörper (1, 1-1, 1-2) angebracht ist, um in Kontakt mit dem Heißsiegelmaterial (5) zu sein,
   **dadurch gekennzeichnet, dass** ein winziger Temperatursensor (9) an der Oberfläche des Abdeckmaterials (7, 7-1, 7-2) auf der Seite angebracht ist, die mit dem Heißsiegelmaterial (5) in Kontakt steht, und ein Betätigungsmechanismus, der die Heizkörper (1, 1-1, 1-2) vorwärts und rückwärts bewegt, oder ein Steuermechanismus, der den Heizmechanismus der Heizkörper (1, 1-1, 1-2) steuert, und zwar auf der Grundlage des erfassten Ergebnisses des winzigen Temperatursensors (9), vorgesehen ist.

3. Verfahren zum Heißsiegeln unter Verwendung einer Impulsvorrichtung, die ein Heißsiegelmaterial (5) zwischen einem Heizelement (12) und einem Amboss (16) einklemmt, um es heißzusiegeln, wobei das Verfahren

   das Anbringen eines Abdeckmaterials (15-1) auf der Oberfläche des Heizelements, um mit dem Heißsiegelmaterial (5) in Kontakt zu sein,
   das Anbringen eines winzigen Temperatursensors (9) an der Oberfläche des Abdeckmaterials (15-1) auf der Seite, die mit dem Heißsiegelmaterial (5) in Kontakt sein soll, und
   das Steuern der Temperatur der Klebefläche des Heißsiegelmaterials (5) anhand der von dem winzigen Temperatursensor (9) erfassten Temperatur umfasst.

4. Verfahren zum Heißsiegeln nach Anspruch 3, wobei die Temperatur des Ambosses erfasst wird, um den Sollwert der Heiztemperatur im Kaskadensystem zu steuern.

5. Impuls-Heißsiegelvorrichtung, die ein Heißsiegelmaterial zwischen einem Heizelement (12) und einem Amboss (16) einklemmt, um es heißzusiegeln, wobei

   eine Abdeckung (15-1) auf der Oberfläche des Heizelements (12) angebracht ist, die mit dem Heißsiegelmaterial (5) in Kontakt sein soll,
   ein winziger Temperatursensor (9) an der Oberfläche des Abdeckmaterials (15-1) auf der Seite angebracht ist, die mit dem Heißsiegelmaterial (5) in Kontakt sein soll, und
   ein Steuermechanismus, der die dem Heizelement (12) zuzuführende Strommenge auf der Grundlage des von dem winzigen Temperatursensor (9) erfassten Ergebnisses steuert, vorgesehen ist.

6. Heißsiegelvorrichtung nach Anspruch 5, wobei ein winziger Temperatursensor auch an der Oberfläche des Ambosses auf der Seite angebracht ist, die mit dem Heißsiegelmaterial in Kontakt sein soll, und das erfasste Ergebnis des winzigen Temperatursensors auch an den Steuermechanismus gesendet wird.

**Revendications**

1. Procédé de thermoscellage utilisant un appareil de thermoscellage qui thermoscelle un matériau de thermoscellage (5) en le pinçant entre une paire de corps chauffants (1, 1-1, 1-2), qui comprend le montage d'un matériau de couverture (7, 7-1, 7-2) sur la surface d'au moins l'un des corps chauffants (1, 1-1, 1-2) devant être en contact avec le matériau de thermoscellage (5), **caractérisé en ce que** le procédé comprend en outre la fixation d'un micro-capteur de température (9) à la surface du matériau de couverture (7, 7-1, 7-2) sur le côté devant être en contact avec le matériau de thermoscellage, et le contrôle de la température de la face de liaison du matériau de thermoscellage (5) par la température détectée par le micro-capteur de température (9).

**2.** Appareil de thermoscellage qui pince un matériau de thermoscellage (5) entre une paire de corps chauffants (1, 1-1, 1-2) pour le thermosceller, dans lequel un matériau de couverture (7, 7-1, 7-2) est monté sur la surface d'au moins l'un des corps chauffants (1, 1-1, 1-2) devant être en contact avec le matériau de thermoscellage (5), **caractérisé en ce qu'**un micro-capteur de température (9) est fixé à la surface du matériau de couverture (7, 7-1, 7-2) sur le côté devant être en contact avec le matériau de thermoscellage (5), et un mécanisme d'actionnement qui déplace les corps chauffants (1, 1-1, 1-2) vers l'avant et vers l'arrière ou un mécanisme de contrôle qui contrôle le mécanisme de chauffage des corps chauffants (1, 1-1, 1-2), sur la base du résultat détecté par le micro-capteur de température (9), est fourni.

**3.** Procédé de thermoscellage utilisant un appareil à impulsion qui pince un matériau de thermoscellage (5) entre un élément chauffant (12) et une enclume (16) pour le thermosceller, qui comprend

le montage d'un matériau de couverture (15-1) sur la surface de l'élément chauffant devant être en contact avec le matériau de thermoscellage (5),
la fixation d'un micro-capteur de température (9) à la surface du matériau de couverture (15-1) sur le côté devant être en contact avec le matériau de thermoscellage (5), et
le contrôle de la température de la face de liaison du matériau de thermoscellage (5) par la température détectée par le micro-capteur de température (9).

**4.** Procédé de thermoscellage selon la revendication 3, dans lequel la température de l'enclume est détectée pour contrôler la valeur de consigne de la température de chauffage dans un système en cascade.

**5.** Appareil de thermoscellage par impulsion qui pince un matériau de thermoscellage entre un élément chauffant (12) et une enclume (16) pour le thermosceller, dans lequel

un couvercle (15-1) est monté sur la surface de l'élément chauffant (12) devant être en contact avec le matériau de thermoscellage (5),
un micro-capteur de température (9) est fixé à la surface du matériau de couverture (15-1) sur le côté devant être en contact avec le matériau de thermoscellage (5), et
un mécanisme de contrôle est fourni qui contrôle la quantité d'électricité à fournir à l'élément chauffant (12) sur la base du résultat détecté par le micro-capteur de température (9).

**6.** Appareil de thermoscellage selon la revendication 5, dans lequel un micro-capteur de température est également fixé à la surface de l'enclume sur le côté devant être en contact avec le matériau de thermoscellage, et le résultat détecté par le micro-capteur de température est également envoyé au mécanisme de contrôle.

[Fig. 1]

Bonding face (welding face) temperature (℃)

[Fig. 2]

Press bonding time (s)

[Fig. 3]

(a) Both sides heating
(both sides: same temperature)

(b) One side heating
(anvil: without heating, ordinary temperature)

[Fig. 4]

[Fig. 5]

(a)　　　　　　　　　　　(b)

[Fig. 6]

Cover material; 0.03—0.2 mm

Mounting material; 0.005—0.010 mm

Temperature sensor; 50 μm

[Fig. 7]

[Fig. 8]

Tf; Heating element surface temperature,
Tm; Welding face (bonding face) Temperature,
Ti; Interface temperature,
R1; Heat conductivity of cover (Teflon material),
R2; Heat radiation degree at standby,
R3; Heat conductivity of contact face,
r1; Heat conductivity of material,
TC; Temperature controller,
C1; Heat capacity of heat radiation system,
C2; Heat capacity of material surface,
C3; Heat capacity of material,
SW; Contact / release of heating bar (by TC)

* In case of impulse sealing;
  Tf = T3 (room temperature)
  Heat flow is one side of Tf
  → T3

[Fig. 9]

Logic detecting motion

| | Position | | |
|---|---|---|---|
| Control temp. | 98 | 99 | 100 |
| High | ON | ON | ON |
| Appropriate | OFF | ON | ON |
| Low | OFF | OFF | OFF |

〔Fig. 10〕

[Fig. 11]

Press bonding time (s)   [Temperature measurement: high accuracy "MTMS" kit]

[Fig. 12]

Time (s)    Temperature measurement: high accuracy "MTMS" kit

[Fig. 13]

Sectional view

[Fig. 14]

[Fig. 15]

[Fig. 16]

(a) Half cut rib        (b) Channel digging type rib        (c) Drawing type

[Fig. 17]

[Fig. 18]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3465741 B
- JP 4623662 B
- US 6197136 B1
- WO 2018225290 A1
- EP 3168032 A1
- JP 5779291 B